# EUROPEAN PATENT SPECIFICATION

(11) **EP 1 882 584 B1**
(45) Date of publication and mention of the grant of the patent: **02.01.2013**
(21) Application number: 06732599.3
(22) Date of filing: 15.05.2006
(51) Int. Cl.: B32B 27/00, B32B 25/20, G02F 1/1333, G06F 3/033, G09F 9/00

(54) **REMOVABLE PROTECTION PANEL MOUNT STRUCTURE AND MOUNTING SHEET FOR USE THEREIN**
BEFESTIGUNGSSTRUKTUR FÜR ENTFERNBARE SCHUTZFLÄCHE UND BEFESTIGUNGSFOLIE ZUR VERWENDUNG DABEI
STRUCTURE DE FIXATION DE PANNEAU DE PROTECTION AMOVIBLE ET FEUILLE DE FIXATION A UTILISER AVEC

(30) Priority: 16.05.2005 JP 2005143313
(43) Date of publication of application: 30.01.2008
(73) Proprietor: NISSHA PRINTING CO., LTD., Nakagyo-ku Kyoto-shi Kyoto 604-8551 (JP)
(72) Inventor: YAMADA, Shinya, NISSHA PRINTING CO., LTD., Kyoto-shi, Kyoto 6048551 (JP); HASHIMOTO, Takao, NISSHA PRINTING CO., LTD., Kyoto-shi, Kyoto 6048551 (JP); TAKAHATA, Kazuhiko, NISSHA PRINTING CO., LTD., Kyoto-shi, Kyoto 6048551 (JP)
(74) Representative: HOFFMANN EITLE
(86) International application number: PCT/JP2006/309668
(87) International publication number: WO 2006/123616

(56) References cited:
- JP-A- 06 075 701
- JP-A- 07 287 219
- JP-A- 10 222 305
- JP-A- 10 260 395
- JP-A- 2000 265 132
- JP-A- 2001 134 213
- JP-A- 2003 150 316
- JP-A- 2004 348 270
- DATABASE WPI Week 200227 Thomson Scientific, London, GB; AN 2002-209557 XP002508749 & JP 2001 200221 A (COSMOTECH KK) 24 July 2001 (2001-07-24)

## Description

### Technical Field

The present invention relates to a mounting structure of a re-peelable protective panel which can mount a protective panel for use in an electronic apparatus display window on a display in a manner so as to be re-peelable, and also concerns a mounting sheet used for such a mounting structure.

### BACKGROUND OF THE INVENTION

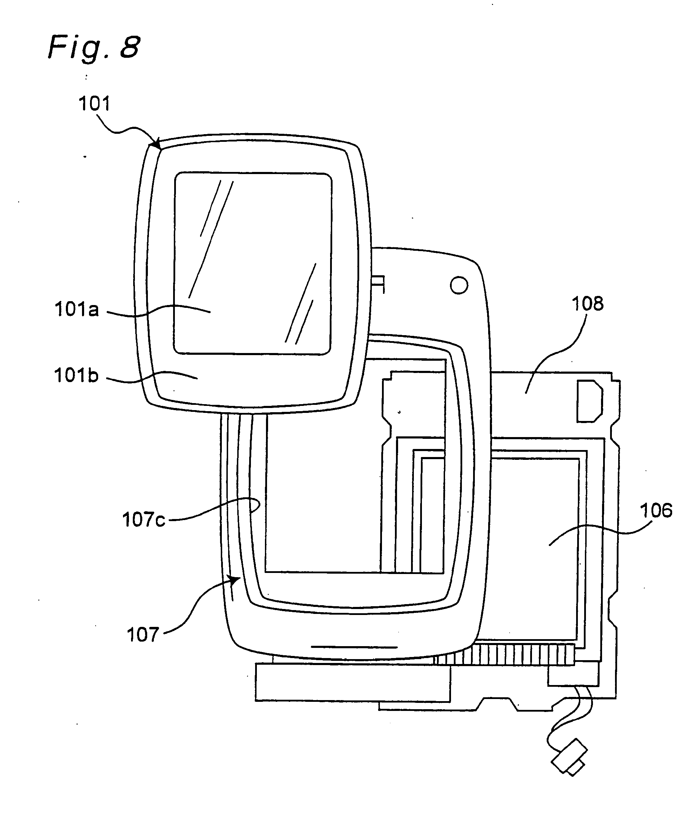

With respect to a casing used for an electronic apparatus such as a cellular phone and a smart phone, those having a flat shape in which a front face case 107 and a back face case 109, made of a synthetic resin, combined with each other have been generally used, and a protective panel 101 is fitted into the surface of the front face case 107 so as to protect a liquid crystal display window thereof (see Fig. 8).

Conventionally, various modifications have been proposed on the protective panel 101. For example, JP-A-2002-72214 has disclosed a method in which in order to solve the issue that the liquid crystal display is hardly discernable in a bright room or outdoors due to reflection, a protective panel 101 is constituted by combining a λ/4 plate, a polarizing plate, and a transparent protective plate with one another. Moreover, the Patent Document has also disclosed arrangements in which an additional function is imparted to the outermost surface of the protective panel 101 by preparing the transparent protective plate as a touch panel or by bonding a hard coat film or a low-reflection film thereto. In recent years, in response to demands for more fashionable electronic apparatuses, a decorative item, such as a fringe shown in Fig. 8, has been formed on the protective panel 101 through printing.

In contrast to the protective panel 101 that is supported and secured onto the peripheral edge of the opening section 107c of the front face case 107, the display 106 is attached to the top face of the circuit substrate 108 placed inside the front face case 107 and the back face case 109; therefore, there is a distance of 0.1 to 3 mm between the back face of the protective panel 101 and the surface of the display 106. For this reason, from the viewpoint of reflection preventive effects, upon mounting the protective panel 101 onto the display 106 having the liquid crystal display window, it is preferable to bond the two members to each other over the entire faces thereof within the viewing area of the display 106 so as to eliminate an air layer.

However, in the case when the bonding process between the protective panel 101 and the display 106 is carried out by using only the transparent adhesive layer of an acrylic adhesive agent or the like, issues arise when, due to a mixed dust or a positional deviation upon mounting, the protective panel 101 needs to be peeled off and the mounting process is again carried out (hereinafter, this process is referred to as "repairing process"). In other words, in an attempt to peel off the protective panel 101, since the transparent adhesive layer is firmly bonded to both of the side of the protective panel 101 and the side of the display 106 in the same manner, the transparent adhesive layer is inner-layer separated to remain on the side of the protective panel 101 as well as on the side of the display 106 respectively, or one portion of the transparent adhesive layer is extended to cause an uneven film thickness, with the result that it becomes difficult or impossible to carry out the repairing process.

In order to solve the above-mentioned issue with the repairing process, a method for mounting the protective panel 101 on a display 106 by using a re-peelable mounting sheet has been proposed, and JP-A- 2003-150316, forming the basis for the preamble of claim 1, has disclosed a process in which a touch panel as one example of the protective panel 101 is mounted on a display 106 by using a one-sided re-peelable sheet 103. In other words, a transparent mounting sheet (one-sided re-peelable sheet 103) is constituted by a plastic film core member, an acrylic adhesive layer formed on one of the faces of the core member, a primer treatment face formed by primer-treating the other face of the core member, and a silicone rubber sheet that is laminated on the primer treatment face to form a re-peelable face, and the adhesive face of the mounting sheet on the acrylic adhesive layer side is bonded to the back face of the transparent touch panel as one example of the protective panel 101, with the adhesive face of the mounting sheet on the silicone rubber sheet side being bonded to the surface of the display 106, so that the touch panel is mounted on the surface of the display 106 in a manner so as to be re-peelable. Upon carrying out a repairing process, this mounting sheet (one-sided re-peelable sheet 103) is cleanly peeled off on the silicone rubber sheet side in most cases, and the mounting sheet is hardly separated.

Further, JP-A-2001-200221 discloses a silicone gel pressure-sensitive adhesive sheet formed by laminating a separator, a pressure-sensitive adhesive layer, a substrate sheet, a silicone gel layer and a separator in this order.

JP-A-2004-348270 suggests a mounting structure for a low-reflection touch panel and a mounting sheet used for the same by which no gel sheet is transferred and separated in repair for which purpose a silicone rubber layer is used instead of a gel sheet.

JP-A-2001-134213 discloses an electro-optic device and a method of producing the same, wherein a silicone sheet is stuck to a liquid crystal panel, a substrate being adhered to the silicone sheet by means of liquid silicone.

JP-A-07-287219 discloses the provision of a silicone gel layer with interposed tight contact accelerating agents to a protective panel or the liquid crystal cell or the light-emitting plate.

JP-A-10-222305 disclose a mounting structure for a transparent touch panel comprising a transparent touch panel, a transparent re-peeling off-sheet, a transparent adhesive layer and a display in this order. In this embodiment the transparent re-peeling sheet is obtained by molding a transparent high polymer adhesive into a gel sheet.

JP-A-06-075701 discloses a liquid crystal display comprising a transparent protective plate, an adhesive layer, a tablet board and the liquid crystal display panel.

JP-A-2000-265132 discloses a radially releasable and reuseable double-sided tape.

JP-A-10-260395 discloses a liquid crystal display, wherein a transparent re-peeling off-sheet is disposed between a liquid crystal display and a fixed electrode member. The re-peeling off-sheet is constituted of a gel sheet having an adhesive power.

### Disclosure Of Invention

### Subject to be solved by the Invention

However, the means used for mounting a touch panel, disclosed in JP-A-2003-150316, has the following issues.

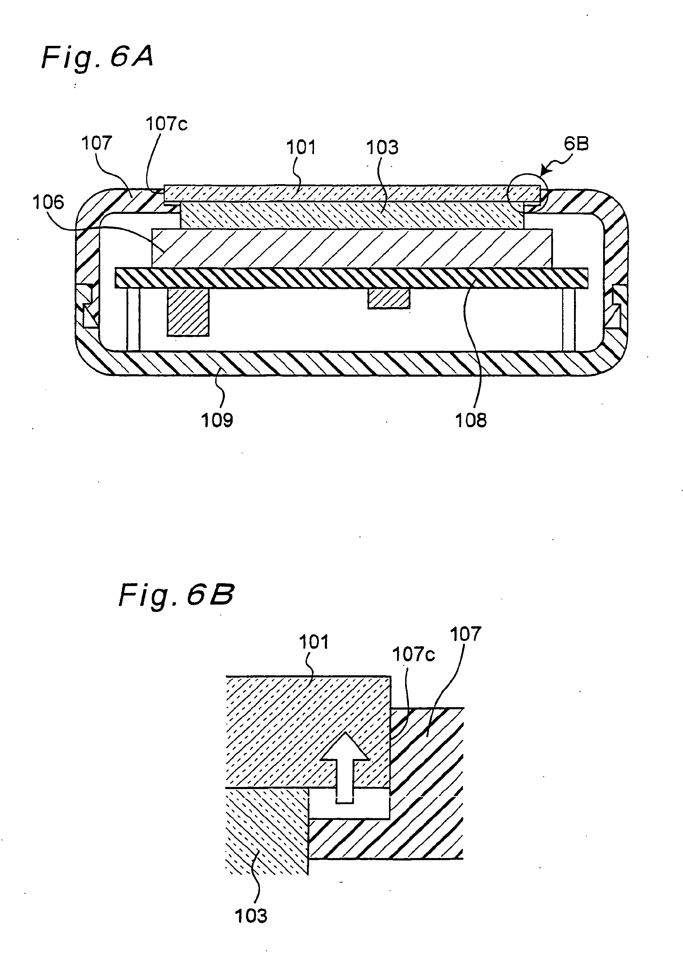

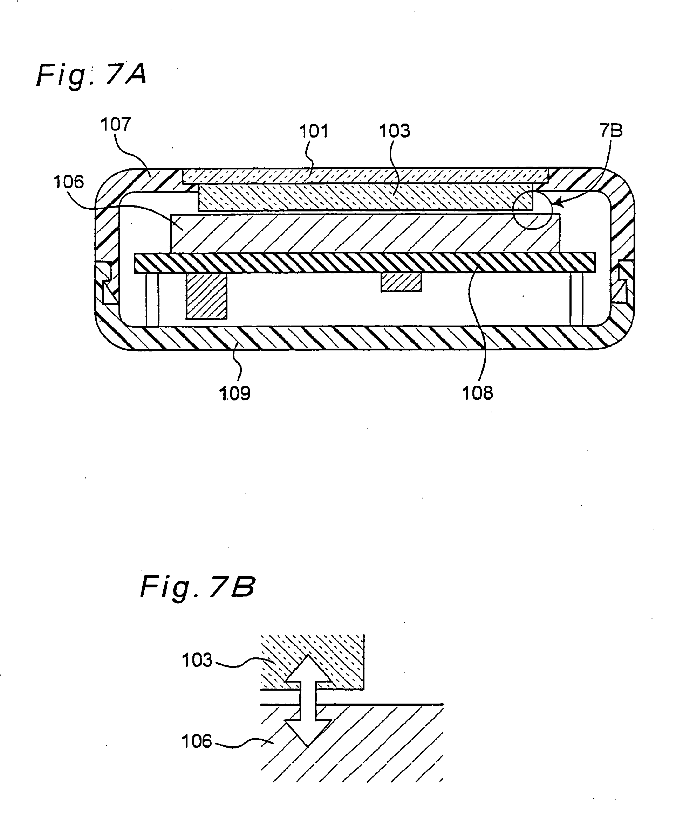

In other words, upon assembling a front face case 107 having a protective panel 101, a circuit substrate 108 having a display 106 and the like, and a back face case 109, the distance between the back face of the protective panel 101 and the surface of the display 106 tends to become different from what has been designed, resulting readily in an error. In contrast, the one-sided re-peelable sheet 103 disclosed in JP-A-2003-150316 is poor in its cushion property. Consequently, when the distance between the back face of the protective panel 101 and the surface of the display 106 is shorter than the designed distance, the front face of the protective panel 101 tends to protrude from the front face case 107 (see Figs. 6A and 6B), or tends to be deformed into a convex shape. In contrast, when the distance between the back face of the protective panel 101 and the surface of the display 106 is longer than the designed distance, the protective panel 101 is not sufficiently bonded to a re-peelable face of the one-sided re-peelable sheet 103, and tends to cause a raised portion (see Figs. 7A and 7B).

Moreover, since the one-sided re-peelable sheet 103 disclosed in JP-A-2003-150316 is poor in its cushion property, it is difficult to apply a pressure upon bonding the back face of the protective panel 101 to the surface of the display 106 appropriately in a manner so as to drive bubbles gradually from the end portion, resulting in a difficulty in properly removing bubbles. Although no bubbles remain when the bonding process is carried out in a reduced-pressure atmosphere, this process requires a special facility.

Therefore, in order to solve the above-mentioned issues, an object of the present invention is to provide a mounting structure of a re-peelable protective panel in which upon assembling, distance errors between the back face of a protective panel and the surface of a display are absorbed so that a bonding process free from bubbles is achieved without the necessity of using a special facility, and a mounting sheet for use in such a mounting structure.

### Means for solving the Subject

In order to achieve the above-mentioned objective, the present invention is provided with the following structure.

In accomplishing these and other aspects, according to the present invention, there is provided a transparent mounting sheet comprising the features of claim 1. Embodiments of the invention are named in the dependent claims.

According to the present invention, there also is provided an mounting structure of a re-peelable protective panel as defined in claims 8 to 12.

### Effects of the Invention

The present invention, which has the above-mentioned structure, is allowed to exert the following effects.

In other words, the protective panel for an electronic apparatus display window is mounted on the surface of the display in a manner so as to be re-peelable through the transparent mounting sheet formed by adding the gel sheet having a superior cushion property to the one-sided re-peelable sheet; therefore, by preliminarily taking a compression margin of the gel sheet into consideration, the mounting sheet that is formed thicker than a designed distance between the rear face of the protective panel and the surface of the display is used so that, even when, upon assembling, any error occurs in the distance between the rear face of the protective panel and the surface of the display in either the minus or plus side with respect to the designed distance (a case where shorter or longer than the designed distance), the corresponding error can be absorbed through the gel sheet. Consequently, it is possible to prevent the front face of the protective panel from protruding out of the front face case or from deforming into a convex shape, and also to prevent the mounting sheet being raised from the re-peelable face without being bonded.

Moreover, since the protective panel for an electronic apparatus display window is mounted on the surface of the display in a manner so as to be re-peelable through the transparent mounting sheet formed by adding the gel sheet having a superior cushion property to the one-sided re-peelable sheet, a pressure can be applied by the fingers or the like from the end portion of the mounting sheet in a manner so as to gradually drive bubbles, upon bonding the rear face of the protective panel to the surface of the display; therefore, it is possible to carry out a bonding process free from bubbles without the necessity of using a special facility.

### BRIEF DESCRIPTION OF THE DRAWINGS

These and other aspects and features of the present invention will become clear from the following description taken in conjunction with the preferred embodiments thereof with reference to the accompanying drawings, in which:
Fig. 1 is a cross-sectional view that shows a mounting structure of a re-peelable protective panel in accordance with a first embodiment of the present invention;
Fig. 2 is a cross-sectional view that shows a mounting structure of a re-peelable protective panel in accordance with a second embodiment of the present invention;
Fig. 3 is a cross-sectional view that shows a mounting structure of a re-peelable protective panel in accordance with a third embodiment of the present invention;
Fig. 4 is a schematic view that shows a relationship between the protective panel and a display on a display window of an electronic apparatus in the embodiments of the present invention;
Fig. 5 is a schematic view showing relationship between a protective panel for an electronic apparatus display window and a display in the embodiments of the present invention;
Fig. 6A is a cross-sectional view of a conventional electronic apparatus in which a protective panel for an electronic apparatus display window and a display are assembled to each other, for explaining issues with the prior art;
Fig. 6B is an enlarged cross-sectional view of a portion surrounded by a circle 6B in Fig. 6A;
Fig. 7A is a cross-sectional view of a conventional electronic apparatus in which a protective panel for an electronic apparatus display window and a display are assembled to each other, for explaining another issues with the prior art;
Fig. 7B is an enlarged cross-sectional view of a portion surrounded by a circle 7B in Fig. 7A;
Fig. 8 is a schematic view showing conventional relationship between a protective panel for an electronic apparatus display window and a display in the embodiments of the present invention;
Fig. 9 is a cross-sectional view that shows the mounting structure of the re-peelable protective panel in accordance with the first embodiment of the present invention in a case where the protective panel is a transparent touch panel;
Fig. 10 is a cross-sectional view that shows a mounting structure of a re-peelable protective panel in accordance with a fourth embodiment of the present invention;
Fig. 11 is a cross-sectional view that shows a mounting structure of a re-peelable protective panel in accordance with a fifth embodiment of the present invention;
Fig. 12 is a cross-sectional view that shows a mounting structure of a re-peelable protective panel in a case where, in Fig. 9, a urethane rubber sheet is be used in the place of the silicon rubber sheet;
Fig. 13 is a cross-sectional view that shows one example of the mounting structure of the re-peelable protective panel in accordance with any one of the first through the fifth embodiments of the present invention in which the re-peelable protective panel and a display are assembled to each other;
Fig. 14 is a cross-sectional view that shows another example of the mounting structure of the re-peelable protective panel in accordance with any one of the first through the fifth embodiments of the present invention in which the re-peelable protective panel and a display are assembled to each other; and
Fig. 15 is a cross-sectional view that shows still another example of the mounting structure of the re-peelable protective panel in accordance with any one of the first through the fifth embodiments of the present invention in which the re-peelable protective panel and a display are assembled to each other.

### DETAILED DESCRIPTION OF THE PREFERRED EMBODIMENTS

Before the description of the present invention proceeds, it is to be noted that like parts are designated by like reference numerals throughout the accompanying drawings.

Referring to Figures, the following description will discuss embodiments of the present invention in detail.

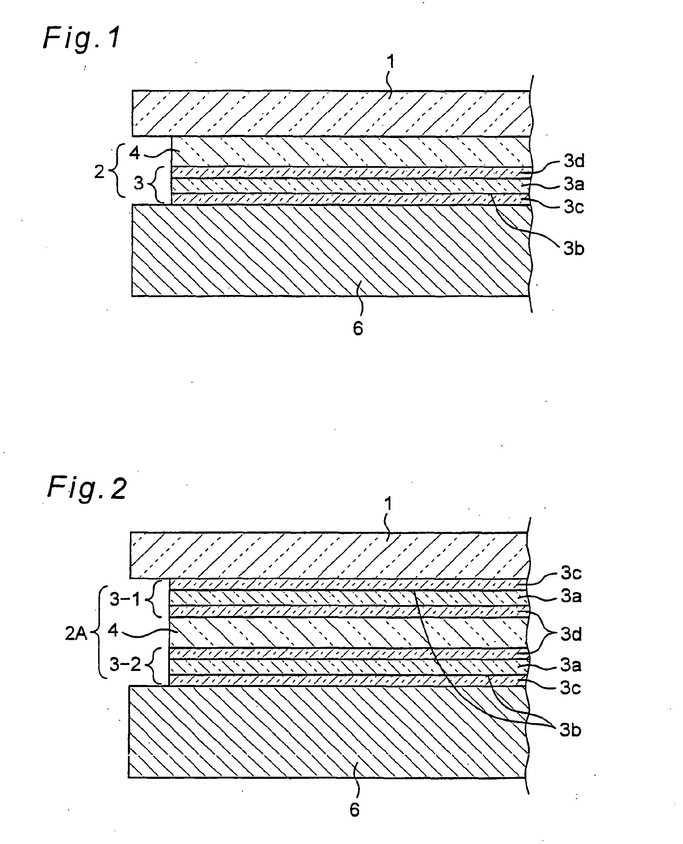

Fig. 1 is a cross-sectional view that shows a mounting structure of a re-peelable protective panel in accordance with the first embodiment of the present invention. In this Figure, reference numeral 1 indicates a transparent protective panel, 2 indicates a transparent mounting sheet, 3 indicates a transparent one-sided re-peelable sheet, 3a indicates a transparent core member, 3b indicates a primary treatment surface, 3c indicates a transparent silicon rubber sheet, 3d indicates an transparent acrylic adhesive layer, and 4 indicates a transparent gel sheet, respectively.

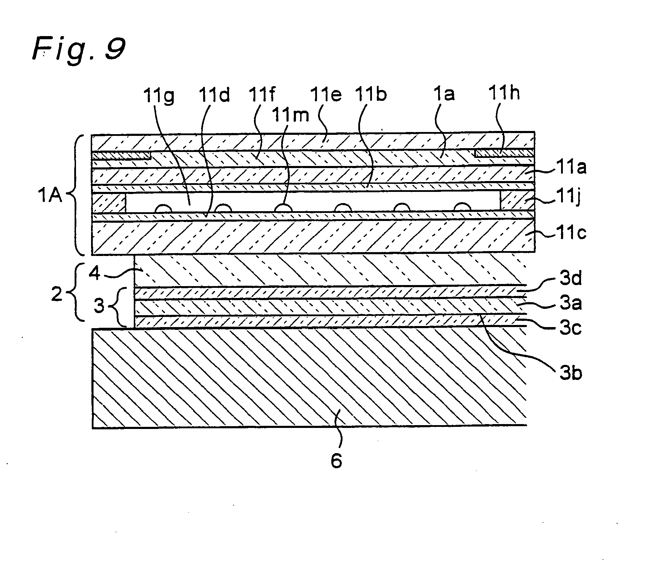

With respect to a transparent touch panel 1A serving as one example of the protective panel 1 of a display window of an electronic apparatus, for example, as shown in Fig. 9, a structure which is provided with a plate-shaped protective panel main body 11c having an upper surface on which a transparent lower electrode 11d is formed, a transparent resin film 11a having a lower surface on which a transparent upper electrode 11b is formed, and a transparent resin cover film 11e, with a decorative layer 11h having a transparent window portion 1a being formed on at least one of the surfaces thereof, is proposed. The protective panel main body 11c and the transparent resin film 11a are bonded to each other on peripheral portions by using a double-sided tape 11j with an air layer 11g being located between the upper and lower electrodes 11b, 11d with the upper electrode 11b confronting the lower electrode 11d so that the transparent resin cover film 11c can be bonded to the upper surface of the transparent resin film 11a by a transparent adhesive agent 11f. Moreover, on each of the protective panel main body 11c and the transparent resin film 11a, a predetermined pattern circuit including bus bars and routing lines is formed on the same surface as each of the transparent lower electrode 11d and the transparent upper electrode 11b, and drawn outside, for example, from the side of the transparent touch panel 1A through a film connector. Alternatively, the circuit is drawn outside from the rear surface of the transparent touch panel 1A through a through-hole formed in the protective panel main body 11c. The transparent window portion 1a of the decorative layer 11h is constructed by a transparent adhesive agent 11f for bonding the transparent resin cover film 11e to the upper surface of the transparent resin film 11a. A plurality of dot spacers 11m are formed on the surface of either one of the transparent upper electrode 11b and the transparent lower electrode 11d so that a gap between the transparent upper electrode 11b and the transparent lower electrode 11d is maintained by the dot spacers 11m.

With respect to the material for the protective panel main body 11c, a material which is superior in transparency, and can protect a display such as a liquid crystal panel and an organic EL panel from damages is used. Examples of the material include general-use resins, such as polystyrene resin, polyolefin resin, ABS resin, AS resin, acrylic resin, or AN resin. Moreover, general-use engineering resin or super engineering resin may be used. Here, with respect to the protective panel main body 11c, the transparent lower electrode 11d may be formed through a transparent resin film which is different from the transparent resin film 11a and is directly arranged on the upper surface of the protective panel main body 11c. The thickness of the protective panel main body 11c is preferably about 0.4 mm or more.

With respect to the material for the transparent resin film 11a, examples thereof include: engineering plastics, such as those of polycarbonate, polyamide, and polyether ketone types, and resin films, such as those of acrylic, polyethylene terephthalate, and polybutylene terephthalate types.

Each of the transparent lower electrode 11d and the transparent upper electrode 11b is made of a transparent conductive film. With respect to the material for the transparent conductive film, examples thereof include: metal oxides, such as tin oxide, indium oxide, antimony oxide, zinc oxide, cadmium oxide, or ITO, and metals such as gold, silver, copper, tin, nickel, aluminum, and palladium, or a thin film of a conductive polymer may be used. With respect to the forming method of the transparent lower electrode 11d and the transparent upper electrode 11b, after conductive coat films have been formed on the entire surfaces of the protective panel main body and the transparent resin film by using a method, such as a vacuum vapor deposition method, a sputtering method, an ion plating method, a CVD method, or a roll coater method, unnecessary portions are etched and removed.

With respect to the material for the circuit, metal such as gold, silver, copper, and nickel, or paste having a conductive property, such as carbon, is used. The forming method for these includes: a printing method, such as a screen printing method, an offset printing method, a gravure printing method, or a flexographic printing method; a photo-resist method; or a brush-painting method.

The end portion of the film connector is inserted between the protective panel main body 11c and the transparent resin film 11a, and connected to the output end of the circuit through a thermal contact-bonding process. Here, when a cut-out portion is formed in the protective panel main body 11c, the film connector is more easily bent and directed to the back surface.

With respect to the material for the transparent resin cover film 11e, in the same manner as the transparent resin film 11a, engineering plastics, such as those of polycarbonate, polyamide, and polyether ketone types, and resin films, such as those of acrylic, polyethylene terephthalate, and polybutylene terephthalate types, may be used.

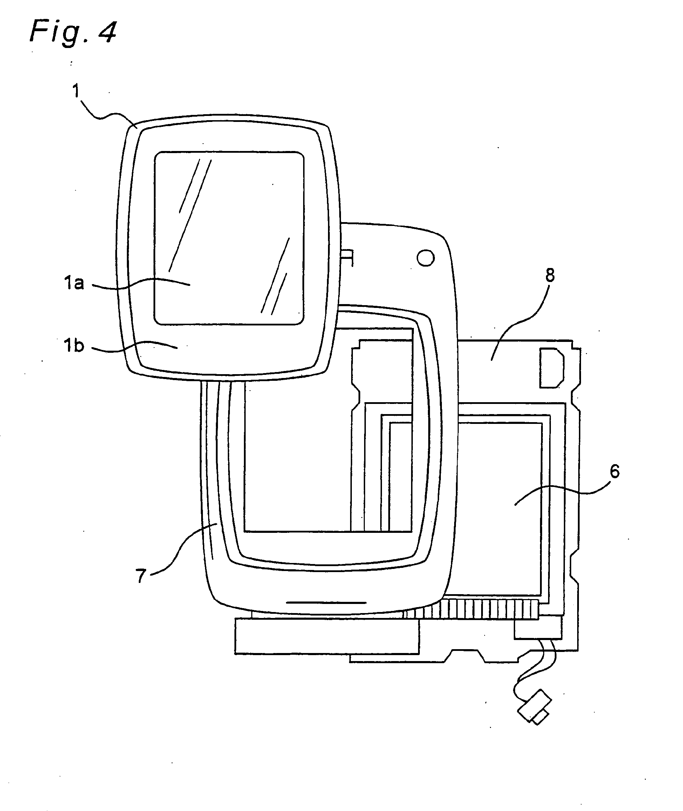

The decorative layer 11h, which has the transparent window portion 1a, is formed on at least one of the surfaces of the transparent resin cover film 11e, and this layer 11h is positioned on the upper face side of the transparent resin film 11a on which the transparent upper electrode 11b has been formed. A portion, covered with the decorative layer 11h, forms a decorative portion 1b of the protective panel 1, and the other portion that is not covered with the decorative layer 11h forms the transparent window portion 1a (see Fig. 4).

In the case of the protective panel 1, the decorative layer 11h is normally formed as a print layer. With respect to the material for the print layer, a coloring ink, which uses resin, such as polyvinyl chloride resin, polyamide resin, polyester resin, polyacrylic resin, polyurethane resin, polyvinyl acetal resin, polyester urethane resin, cellulose ester resin, or alkyd resin, as a binder and contains a pigment or a dye having an appropriate color as a colorant, is preferably used. With respect to the forming method of the print layer, a normal printing method, such as an offset printing method, a gravure printing method, or a screen printing method, may be used. The print layer may be formed on the entire portion or may be partially formed depending on desired decorations to be expressed.

Here, the decorative layer 11h may be prepared as a metal thin-film layer or a combined layer between the print layer and a metal thin-film. The metal thin-film, which is used for applying metallic gloss as the decorative layer 11h, is formed by using a vacuum vapor deposition method, a sputtering method, an ion-plating method, or a plating method. In this case, metal, such as aluminum, nickel, gold, platinum, chromium, iron, copper, tin, indium, silver, titanium, lead, or zinc; or an alloy; or a compound of these may be used depending on the metallic glossy color to be desirably expressed. The metal thin-film layer is normally formed partially. Moreover, upon forming the metal thin-film, a pre-anchor layer and a post-anchor layer may be placed in order to improve the adhesion to another layer.

Moreover, the decorative layer 11h may be formed either of the surfaces of the transparent resin cover film 11e; however, when formed as a lower surface layer, this layer can be protected by the transparent resin cover film 11e from abrasion due to pressing forces caused by fingers, pens, or the like.

The above description has exemplified the panel that is attached to the front face of a protective panel main body 11c with a touch input function and that is a touch panel 1A serving as one example of the protective panel 1; however, the protective panel 1 is not intended to be limited by the above-mentioned structure having the touch input function, and any other protective panel (for example, a panel that is composed of only a single transparent resin board or glass plate) known in the art may be used.

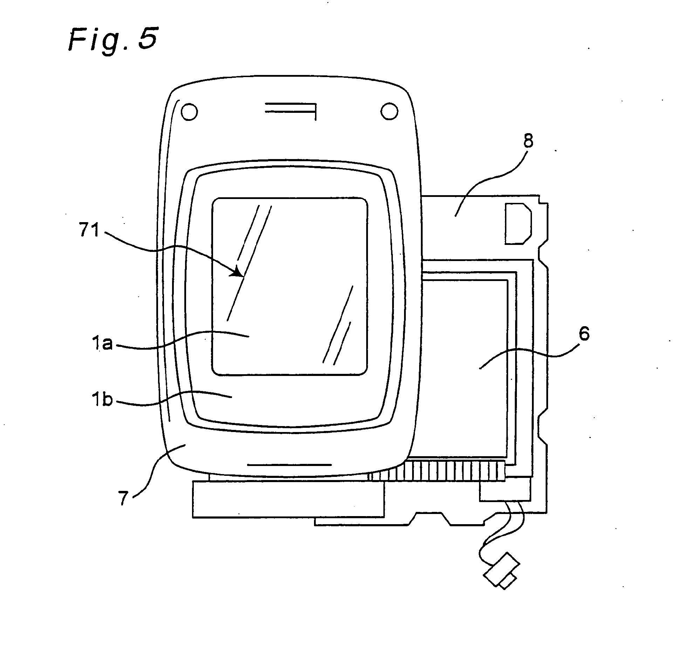

Moreover, different from the structure where after the protective panel 1 and the front face case 7 are separately manufactured, the protective panel 1 is fitted to the surface of the front face case 7, as shown in Fig. 4, as the protective panel 1 of the sheet 2 for mounting according to the first embodiment the present invention, a protective panel 71 may have a structure that forms one portion of the front face case 7, as shown in Fig. 5. In other words, different from the structure in which the protective panel 1 which has been molded in a separated manner from the front face case 7 and then is fitted to the front face case 7, the protective panel 71 may be molded as an integral part together with the front face case 7.

The display 6 represents a display of an input device of electronic equipment (more specifically, a display such as LCD or organic ELD) including a display of portable electronic equipment such as portable telephone, smart phone, portable game device, sub-notebook personal computer, PDA (Personal Digital Assistant), car navigation, digital camera, video camera, or equipment for service communications; and a monitor for personal computer. The transparent touch panel 1A is mounted on the surface of the display 6 and, subsequently, pressing a display surface of the transparent touch panel 1A with a pen, a finger, or the like while seeing a screen of the display 6 therethrough brings the upper electrode 11b and the lower electrode 11d into contact with each other so that various input operations as an input device are carried out.

The following description will discuss a mounting process of the protective panel 1 in which the mounting sheet 2 containing the gel sheet 4 having a cushion property, which is a feature of the first embodiment of the present invention, is used onto the display 6.

A mounting structure of a re-peelable protective panel 1 in accordance with the first embodiment shown in Fig. 1 is designed so that a one-sided re-peelable sheet 3 is composed of a core member 3a of a transparent plastic film, a silicone rubber sheet 3c that is laminated on a primer treated face 3b that has been formed on one of the faces of the core member 3a through the primer treatment for constructing an adhesive surface on a display side, and an acrylic adhesive layer 3d that is successively laminated on the other face of the core member 3a. In addition, in the mounting structure, the one-sided re-peelable sheet 3 is bonded to at least one of the faces of the gel sheet 4 by the acrylic adhesive layer 3d so as to form the transparent mounting sheet 2. The protective panel 1 is mounted on the surface of the display 6 with the mounting sheet 2 to form the mounting structure by constructing so that the other surface of the gel sheet 4 constructs an adhesive surface on a transparent touch panel side. The gel sheet 4 of the mounting sheet 2 constructed in such a manner is bonded to the entire face of a view area of the rear face of the protective panel 1 (in other words, the face on the display 6 side of the protective panel 1 in this first embodiment (the lower surface of Fig. 1)) and the silicone rubber sheet 3c of the one-sided re-peelable sheet 3 of the mounting sheet 2 is brought into contact with the entire surface of the display 6.

The plastic film serving as the core member 3a is used for supporting the acrylic adhesive agent layer 3d and the silicone rubber sheet 3c. Moreover, since the primer treatment face 3b is formed on the other surface of the plastic film, the plastic film is firmly bonded to the silicone rubber sheet 3c. On condition that the mounting sheet 2 is provided on a rear surface of a large-sized panel (for example, a 500 mm by 500 mm panel from which twenty-five transparent touch panels 1A each measuring 100 mm by 100 mm can be stamped out) from which a number of transparent touch panels 1A are to be obtained and is thereafter stamped out together with each transparent touch panel 1A, provision of the primer-treated surface 3b on the core member 3a ensures tight adhesion of the core member 3a to the silicone rubber sheet 3c so that the silicone rubber sheet 3c of the mounting sheet 2 can be restrained from protruding from a circumference of each transparent touch panel 1A obtained by the stamping-out. With respect to the core member 3a, in order not to cause degradation in the visibility of the display 6, a material, which is superior in transparency, and has a total light transmittance of 88 % or more (JIS-K7105-1981) and a haze value of 3 % or less (JIS-K7105-1981), is preferably used. Moreover, with respect to the core member 3a, for example, a film that is transparent and has an optically isotropic property, such as PET (Polyethylene Terephthalate), PC (Polycarbonate), TAC (Triacetyl Cellulose), or PES (Polyester Sulfone) film, may be preferably used.

Here, the thickness of the plastic film forming the core material 3a is preferably set to 12µm or more. The thickness of less than 12µm tends to cause a waving core member 3a upon forming the coat film, making it difficult to evenly control the thickness; therefore, the surface to form the outside face of the silicone rubber sheet 3c (in other words, the surface on the display 6 side of the protective panel 1 in this first embodiment) has irregularities, and tends to cause bubbles due to air mingled at the time of mounting the transparent touch panel 1. The thickness of the plastic film forming the core material 3a is preferably set to 75 µm or less. Since the one-sided re-peelable sheet 3 including the core member 3a is bonded to the flexible gel sheet 4, the thickness of more than 75 µm of the core material 3a tends to impair its flexibility function so that the one-sided re-peelable sheet 3 may not fit the gel sheet 4. More specifically, as a numeric example, the thickness of the core member 3a is 38 µm.

In general, the above-mentioned primer treatment is a treatment in which in order to improve the adhesion between the base member and the coating agent, an intermediate agent that is well compatible with the two members is applied to the base member. In the wider sense of the word, the primer treatment refers to an easy bonding treatment, which includes a treatment used for increasing the adhesion by forming irregularities on the surface of the base member to increase the surface area and a treatment used for increasing the adhesion by conducting a surface-modifying treatment through a corona process or the like. In the mounting sheet 2 of the above-mentioned first embodiment of the present invention, the silicone rubber sheet 3c is firmly bonded to the core member 3a through the primer treatment so that, upon peeling the touch panel 1A off, the peeling may not take place between the core member 3a and the silicone rubber sheet 3c, or upon stamping-out, the silicon rubber sheet 3c may not be shifted between the core member 3a and the silicon rubber sheet 3c so as not to protrude the silicon rubber sheet 3c from the circumference of the transparent touch panel 1A.

The acrylic adhesive layer 3d, which is formed by applying an adhesive agent generally used for adhesive tapes or the like, is designed to exert a strong adhesive strength that is not only resistant to a separating force that is exerted in the perpendicular direction to the formation face of the acrylic adhesive layer 3d between the acrylic adhesive layer 3d and the gel sheet 4 and an offset force that is exerted in a lateral direction along the formation face of the acrylic adhesive layer 3d, but also resistant even to a separating force that is exerted so as to separate the one-sided re-peelable sheet 3 from the gel sheet 4 to which the one-sided re-peelable sheet 3 has been bonded through the acrylic adhesive layer 3d in a manner so as to peel the one-sided re-peelable sheet 3 from the end portion, so that the one-sided re-peelable sheet 3 and the gel sheet 4 are not easily peeled off from each other.

Here, the thickness of the acrylic adhesive layer 3d is preferably set to 10 µm or more. The thickness of less than 10 µm tends to unfavorably cause raised portions without being bonded, even in an attempt to bond it to the gel sheet 4. A thickness of the acrylic adhesive agent layer 3d is preferably in a range from 10 to 50 µm. The thickness smaller than 10 µm weakens the adhesive strength and makes it difficult to control whether the mounting sheet 2 will be left on the side of the transparent touch panel 1A or on the side of the display 6 in the repair. The thickness larger than 50 µm makes the adhesive strength too large, on the contrary, and makes it difficult to remove air bubbles even if defoaming process is performed on air bubbles that occur or have occurred between the acrylic adhesive agent layer 3d and the gel sheet 4 in manufacturing the mounting sheet 2, e.g., even if the mounting sheet 2 is pressed with a roller or the like while being roundly bent so that the air bubbles are expelled gradually from an end or even by placement in reduced-pressure atmosphere.

The silicone rubber sheet 3c is highly resistant to a separating force exerted in the perpendicular direction to the layout face of the silicone rubber sheet (primer treatment face 3b) and a shift force exerted in a lateral direction along the layout face, between the silicon rubber sheet 3c and an adhesion object; however, when a separating force, which is exerted so as to separate the mounting sheet 2 from the adhesion object to which the mounting sheet 2 has been bonded, through the silicone rubber sheet 3c in a manner so as to peel the mounting sheet 2 from the end portion, is exerted, the mounting sheet 2 and the adhesion object are easily peeled off from each other. With respect to the material for the silicone rubber sheet 3c, a silicone rubber sheet to be used as a shock absorbing agent or the like may be preferably used. Moreover, with respect to the silicone rubber sheet 3c, for example, a mixture between silicone rubber and silicone resin is formed into an ink by using a solvent, and a material to which this has been coated, and then crosslinked by using heat at the time of drying, may also be used.

Here, the above-mentioned silicone rubber sheet 3c is not lowered in its securing force, even after attaching and detaching processes of many times.

The thickness of the silicone rubber sheet 3c forming the re-peelable face of the mounting sheet is preferably set in a range from 20 to 100 µm. The thickness of the silicone rubber sheet 3c exceeding 100 µm makes the adhesive strength too strong, with the result that upon peeling the protective panel 1, it becomes difficult to separate the protective panel 1 on the face of the mounting sheet 2 on the silicone rubber sheet 3c side. Moreover, in the case when the thickness of the silicone rubber sheet 3c is less than 20 µm, even in an attempt to bond the silicone rubber sheet 3c to an adhesion object such as a display 6, raised portions without being bonded tend to be generated, with the result that it is too easily (in other words, beyond the necessary level) peeled off.

The gel sheet 4 is used for imparting a cushion property to the mounting sheet 2. The gel sheet 4 is obtained by molding a transparent high molecular adhesive agent into a gel sheet shape. With respect to the high molecular adhesive agent, for example, urethane-based, acryl-based, or natural high-molecular materials may be used. Here, the gel sheet 4 is used for preventing from separating the gel sheet 4 from the protective panel 1 in a normal usage state after the mounting process. Moreover, the gel sheet 4, made from a high-molecular adhesive agent, also serves as a shock absorber because of an elastic property inherent to the gel so as to protect the display 6 from various impacts and deformations. The thickness of the gel sheet 4 is constructed so as to be larger than a designed distance by such a distance that the gel sheet 4 may be compressed to a certain extent when the protective panel 1 for the electronic apparatus display window is mounted on the surface of the display 6 in a manner so as to be re-peelable. Consequently, the total thickness of the mounting sheet 2 is larger than the designed distance between the rear face of the protective panel 1 and the surface of the display 6, and thus, even when, upon assembling, any error occurs in the distance between the rear face of the protective panel 1 and the surface of the display 6 in the minus side with respect to the designed distance (in a case shorter than the designed distance) and the plus side with respect to the designed distance (in a case longer than the designed distance), the corresponding error can be absorbed through the gel sheet 4. The mounting sheet 2 has such an excellent function described above. The upper limit of the thickness of the gel sheet 4 may be arbitrarily determined as usage. With taking into consideration with the real usage situation, the thickness of the gel sheet 4 is preferably 10 mm. The lower limit of the thickness of the gel sheet 4 is 0.2 mm. The reason is that the lower limit of the thickness of an existent gel sheet is 0.2 mm and that the thickness less than 0.2 mm of the gel sheet impairs its cushion function and the gel sheet tends to be broken due to too-small thickness, unfavorably resulting in difficulty for assembling.

In a case where the gel sheet 4 is compressed so as to absorb any error occurred in the designed distance, and thus a part of the gel sheet 4 is protruded in the transverse direction, it is necessary to define a space for allowing the protrusion of the gel sheet 4 at the circumference of the gel sheet 4. As such a space, it is preferable that a space having a distance G equal to or more than 50% of the thickness of the gel sheet 4 in a direction perpendicular to the thickness direction of the gel sheet 4 is defined at the whole circumference of the gel sheet 4 (For example, it is preferable that a space having a distance G of 5 mm or more when the thickness of the gel sheet 4 is 10 mm is defined at the whole circumference of the gel sheet 4). In a case where such a space is defined at the whole circumference of the gel sheet 4, even though the gel sheet 4 is compressed to protrude a part of the gel sheet 4 in the transverse direction, the protruded part of the gel sheet 4 is accommodated into the space having the distance corresponding to the thickness of the gel sheet 4 in the thickness direction of the gel sheet 4, and then the protruded part does not reach the layer(s) adjacent to the gel sheet 4. Thus, such a space can surely prevent from causing adverse effects on the visibility of the display 6 and the input operability of the touch panel 1A. Contrarily, in a case where such a space is not defined at the circumference of the gel sheet 4, even though a part of the gel sheet 4 tends to protrude in the transverse direction, the gel sheet 4 can not protrude and thus the thickness of a part of the gel sheet 4 adversely becomes larger than the thickness of the other part thereof. Then, the thickness of the gel sheet 1 becomes uneven, possibly resulting in causing adverse effects on the visibility of the display 6 and the input operability of the touch panel 1A. Alternatively, even though a part of the gel sheet 4 is protruded in the transverse direction from the gel sheet 4, the protruded part immediately and adversely reaches the layer(s) adjacent to the gel sheet 4 to enter the viewing area of the display 6, possibly resulting in causing adverse effects on the visibility of the display 6 and the input operability of the touch panel 1A. In order to surely prevent such troubles, as described above, the space having the distance G 50% or more of the thickness of the gel sheet 4 is preferably defined at the whole circumference of the gel sheet 4.

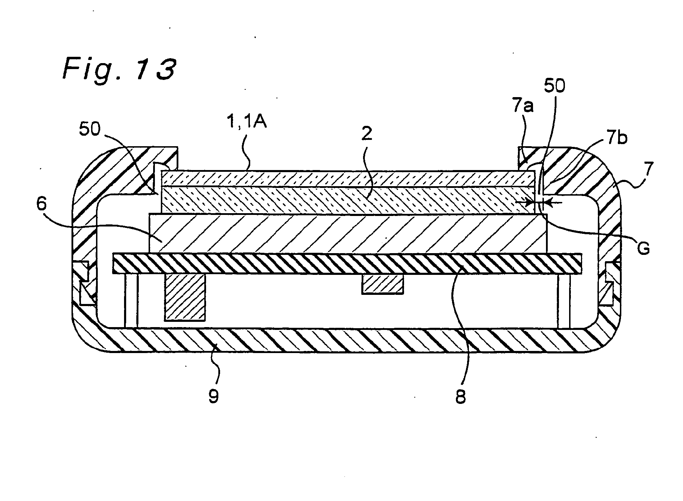

As more specific examples where the spaces are defined, Figs. 13-15 show cross-sectional views showing three examples of the mounting structures of the re-peelable protective panels in accordance with any of the first through the fifth embodiments of the present invention in which the re-peelable protective panel and the display 6 are assembled to each other.

Fig. 13 shows an example where the space (space 50) is defined between the mounting sheet 2 and the front face case 7. That is, in Fig. 13, the protective panel 1 (alternatively, touch panel 1A) and the mounting sheet 2 have almost the same shape and size, and the periphery of the surface of the protective panel 1 (alternatively, touch panel 1A) is covered with an opening formation portion 7a for forming the transparent window portion 1a of the front face case 7. Between a front face case main body inner-wall 7b close to the opening formation portion 7a and the outer side surface of the gel sheet 4 of the mounting sheet 2, the space 50 for allowing protrusion of the gel sheet 4 which has the distance G is defined.

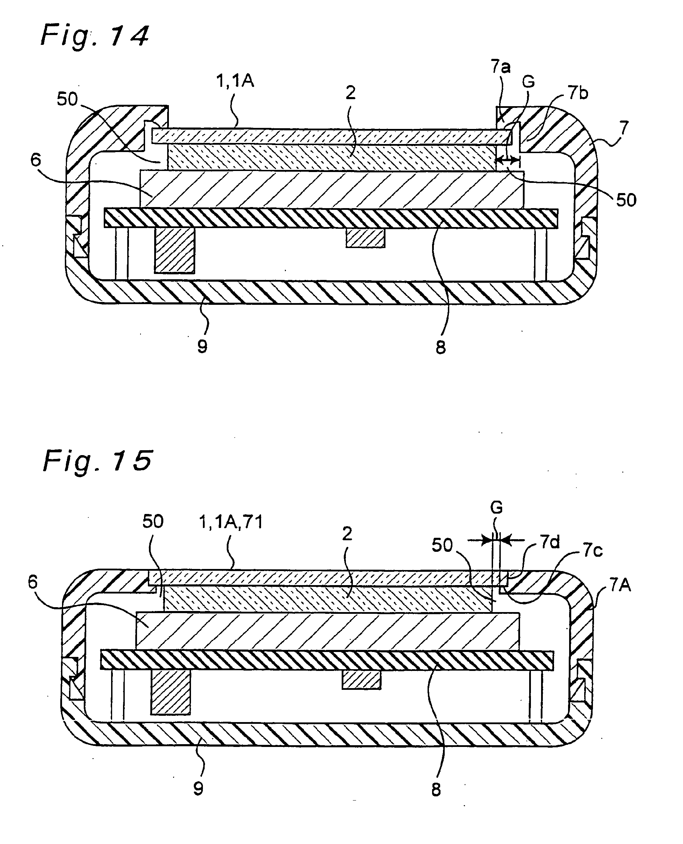

Fig. 14 shows an example where the space is defined on the mounting sheet 2 itself (on the other words, in order to define the space in the mounting sheet 2, the mounting sheet 2 is smaller than the protective panel 1 (alternatively, touch panel 1A)). That is, in Fig. 14, the mounting sheet 2 is smaller than the protective panel 1 (alternatively, touch panel 1A), and the periphery of the surface of the protective panel 1 (alternatively, touch panel 1A) is covered with an opening formation portion 7a for forming the transparent window portion 1a of the front face case 7. Thus, between a front face case main body inner-wall 7b close to the opening formation portion 7a and the outer side surface of the gel sheet 4 of the mounting sheet 2 and between the protective panel 1 (alternatively, touch panel 1A) and the display 6, the space 50 for allowing protrusion of the gel sheet 4 which has the distance G is defined.

Fig. 15 shows an example where the space is defined between the mounting sheet 2 and the front face case 7 when the surface of the protective panel 1 (alternatively, touch panel 1A) and the surface of the front face case 7 are flush with each other. That is, in Fig. 15, the mounting sheet 2 is smaller than the protective panel 1, 71 (alternatively, touch panel 1A), and the protective panel 1 (alternatively, touch panel 1A) is fitted into an opening formation portion 7d for forming the transparent window portion 1a of the front face case 7 (alternatively, the protective panel 71 and the front face case 7 are integrally molded to each other), the surface of the protective panel 1, 71 (alternatively, touch panel 1A) and the surface of the front face case 7 are flush with each other. Thus, between a front face case main body inner-wall 7c close to the opening formation portion 7d and the outer side surface of the gel sheet 4 of the mounting sheet 2 and between the protective panel 1, 71 (alternatively, touch panel 1A) and the display 6, the space 50 for allowing protrusion of the gel sheet 4 which has the distance G is defined.

In addition, in Figs. 14 and 15, when the mounting sheet 2 is smaller than the protective panel 1, 71 (alternatively, touch panel 1A), the size of the mounting sheet 2 is more than the viewing area (visible area) of the display 6 whereby no trouble is caused.

Here, of the outermost surfaces of the mounting sheet 2 (that is, the outer surface of the gel sheet 4 and the outer surface of the silicon rubber sheet 3c), the peeling strength of one of the surfaces is made higher than the peeling strength of the other so that it is possible to always cause the separation on the same side of the mounting sheet 2. For example, the peeling strength of the outer surface of the gel sheet 4 is higher than the peeling strength of the outer surface of the silicon rubber sheet 3c so that it is possible to always cause the separation on the side between the silicon rubber sheet 3c and the display 6. Conversely, the peeling strength of the outer surface of the silicon rubber sheet 3c is higher than the peeling strength of the outer surface of the gel sheet 4 so that it is possible to always cause the separation on the side between the gel sheet 4 and the protective panel 1.

Moreover, upon coating processes during the manufacturing processes of the mounting sheet 2, that is, upon coating a coating agent at the time of the primer treatment, upon coating an acrylic adhesive agent at the time of formation of the acrylic adhesive layer 3d, as well as upon coating at forming the silicone rubber sheet 3c, a general coating method, such as a gravure coating method, a reverse coating method, a comma coating method, or a die coating method, may be used.

In accordance with the first embodiment, upon repairing, the mounting sheet 2 is usually peeled off neatly from the display 6 on the silicone rubber sheet 3c side because the peeling strength of the outer surface of the gel sheet 4 is higher than the peeling strength of the outer surface of the silicon rubber sheet 3c, so that a part of the mounting sheet 2 is seldom transferred to the display 6 or a part of the mounting sheet 2 is separated from the other thereof.

Furthermore, according to the first embodiment, the protective panel 1 for an electronic apparatus display window is mounted on the surface of the display 6 in a manner so as to be re-peelable through the transparent mounting sheet 2 formed by adding the gel sheet 4 having a superior cushion property to the one-sided re-peelable sheet 3, and therefore, by preliminarily taking a compression margin of the gel sheet 4 into consideration, the mounting sheet 2 that is formed thicker than a designed distance between the rear face of the protective panel 1 and the surface of the display 6 is used so that, even when, upon assembling, any error occurs in the distance between the rear face of the protective panel 1 and the surface of the display 6 in the minus side with respect to the designed distance (in a case shorter than the designed distance) and the plus side with respect to the designed distance (in a case longer than the designed distance), the corresponding error can be absorbed through the gel sheet 4. Consequently, it is possible to prevent the front face of the protective panel 1 from protruding out of the front face case 7 or from deforming into a convex shape, and also to prevent the mounting sheet 2 being raised from the re-peelable face without being bonded.

Moreover, according to the first embodiment, since the protective panel 1 for an electronic apparatus display window is assembled on the surface of the display 6 in a manner so as to be re-peelable through the transparent mounting sheet 2 formed by adding the gel sheet 4 having a superior cushion property to the one-sided re-peelable sheet 3, a pressure can be applied by the fingers or the like from the end portion of the gel sheet 4 in a manner so as to gradually drive bubbles, upon bonding the rear face of the protective panel 1 to the surface of the display 6; therefore, it is possible to carry out a bonding process free from bubbles without the necessity of using a special facility.

Referring to Fig. 1, the mounting structure of the first embodiment has been explained; however, the present invention is not intended to be limited to this embodiment, and can be carried out in various other modes.

For example, in a mounting structure of a re-peelable protective panel in accordance with a second embodiment of the present invention, as shown in Fig. 2, a transparent mounting sheet 2A having the gel sheet 4 in which one-sided re-peelable sheets 3 (that is, a first one-sided re-peelable sheets 3-1 and a second one-sided re-peelable sheets 3-2) are bonded onto both of the two faces thereof is used in place of the transparent mounting sheet 2 of the first embodiment. In the mounting structure, the protective panel 1 on which the mounting sheet 2A is formed is mounted on the surface of the display 6 so as to bond the silicone rubber sheet 3c of the first one-sided re-peelable sheets 3-1 of the mounting sheet 2A on the entire face of the view area of the rear face of the protective panel 1 (in other words, the surface on the display 6 side of the protective panel 1 (the lower surface of the protective panel 1 in Fig. 2) in the second embodiment) and make the silicone rubber sheet 3c of the second one-sided re-peelable sheets 3-2 in contact with the entire surface of the display 6. In this case, it is not necessary for the silicon rubber sheets 3c that are the outermost faces of the two one-sided re-peelable sheets 3-1 and 3-2 to have the same peeling strength, and by making the peeling strength of the one silicon rubber sheet 3c of the outermost faces higher than the peeling strength of the other silicon rubber sheet 3c, it is possible to always cause the separation on the same side of the mounting sheet 2A (the outer surface side of the silicon rubber sheet 3c having the lower peeling strength).

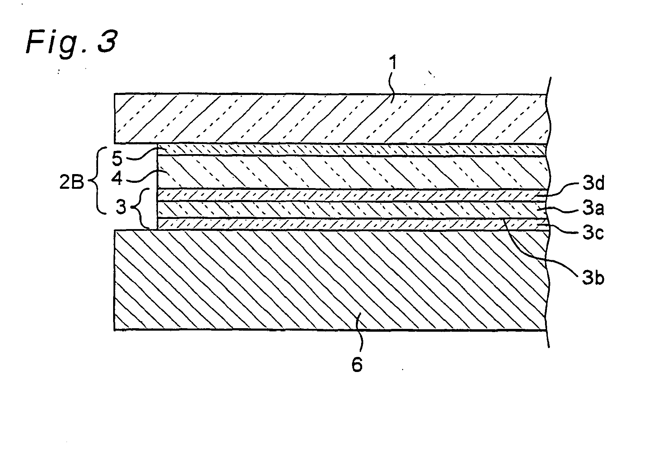

Moreover, in a mounting structure of a re-peelable protective panel 1 in accordance with a third embodiment of the present invention as shown in Fig. 3, a transparent mounting sheet 2B having the gel sheet 4 in which an acrylic adhesive layer 5 is further laminated on the surface with no one-sided re-peelable sheets 3 being bonded thereto is used in place of the transparent mounting sheet 2 of the first embodiment. In the mounting structure, the protective panel 1 on which the mounting sheet 2B is formed is mounted on the surface of the display 6 so as to bond the acrylic adhesive agent layer 5 of the mounting sheet 2B on the entire face of the view area of the rear face of the protective panel 1 (in other words, the surface on the display 6 side of the protective panel 1 (the lower surface of the protective panel 1 in Fig. 3) in the third embodiment)and make the silicone rubber sheet 3c of the mounting sheet 2B in contact with the entire surface of the display 6.

With this arrangement, the adhesive strength of the surface of the gel sheet 4 with no one-sided re-peelable sheet 3 bonded thereto can be improved so that it is possible to positively peel off between the silicon rubber sheet 3c and the display 6 at the outermost surface of the one-sided re-peelable sheet 3, without between the protective panel 1 and the acrylic adhesive agent layer 5. In this case, the material to be used as the acrylic adhesive layer 5 is the same as that used in the acrylic adhesive layer 3d of the one-sided re-peelable sheet 3.

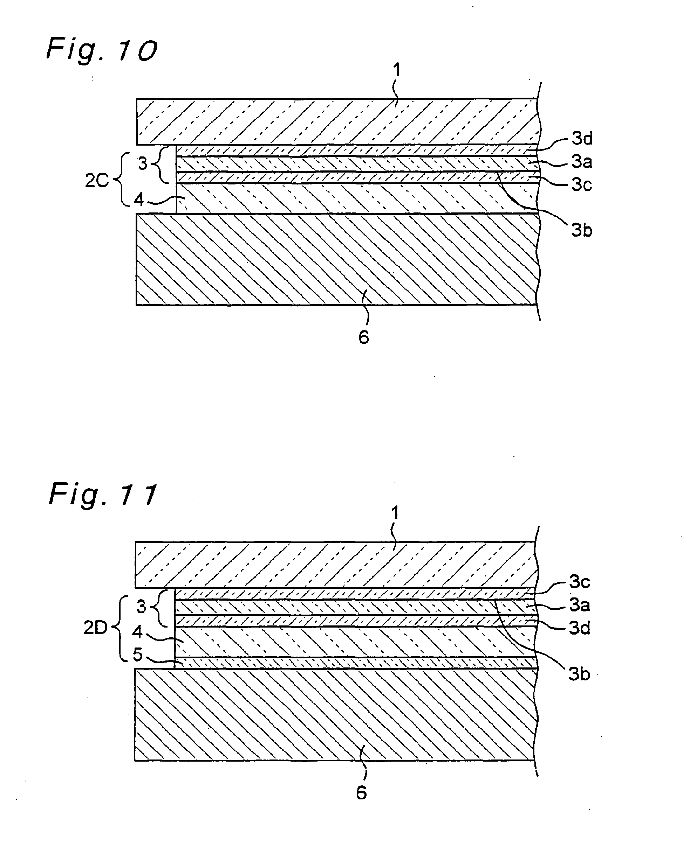

Moreover, as a mounting sheet 2C according to a fourth embodiment of the present invention, as shown in Fig. 10, the mounting sheet 2 of the first embodiment of the present invention can be arranged upside down to the structure of Fig. 1 so that the silicone rubber sheet 3c is prepared as the adhesion face on the protective panel side and the gel sheet 4 is prepared as the adhesion face on the display side. In other words, the mounting may be performed so that the transparent mounting sheet 2C is bonded to the surface of the display 6 by its gel sheet 4 and the protective panel 1 is bonded on the silicon rubber sheet 3c that is the surface of the mounting sheet 2C on the display 6.

Furthermore, as a mounting sheet 2D according to a fifth embodiment of the present invention, as shown in Fig. 11, the mounting sheet 2B of the third embodiment of the present invention can be arranged upside down to the structure of Fig. 3 so that the silicone rubber sheet 3c is prepared as the adhesion face on the protective panel side and the acrylic adhesive layer 5 is prepared as the adhesion face on the display side. In other words, the mounting may be performed so that the acrylic adhesive layer 5 of the transparent mounting sheet 2D is bonded to the surface of the display 6 and the protective panel 1 is bonded on the silicon rubber sheet 3 of the surface of the mounting sheet 2D on the display 6.

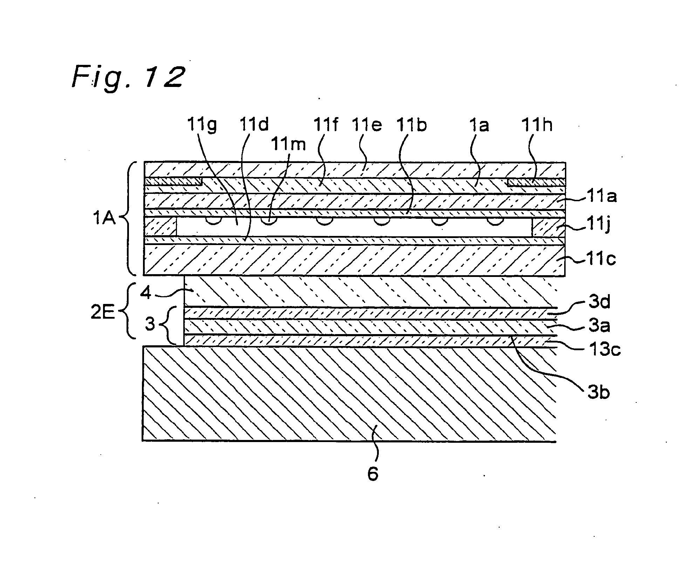

Moreover, in the first through fifth embodiments, in the place of the silicon rubber sheet 3c, a urethane rubber sheet 13c may be used to form a mounting sheet 2E. For example, as shown in Fig. 12, in the mounting sheet 2 of Fig. 9, a urethane rubber sheet 13c may be used in the place of the silicon rubber sheet 3c, to form a mounting sheet 2E. Since the figures of the mounting sheets using the urethane rubber sheets 13c are not different from those of the mounting sheets using the silicon rubber sheets, representatively, only one example of a case where the urethane rubber sheet 13c is used in Fig. 9 is shown as Fig. 12. In other figures, the silicon rubber sheets 3c may be read as urethane rubber sheets 13c. The urethane rubber sheet 13c is highly resistant to a separating force exerted in the perpendicular direction to the layout face of the urethane rubber sheet (primer treatment face 3b) and a shift force exerted in a lateral direction along the layout face, between the urethane rubber sheet 13c and an adhesion object; however, when a separating force, which is exerted so as to separate the mounting sheet 2 from the adhesion object to which the mounting sheet 2 has been bonded, through the urethane rubber sheet 13c in a manner so as to peel the mounting sheet 2 from the end portion, is exerted, the mounting sheet 2 and the adhesion object are easily peeled off from each other. With respect to the material for the urethane rubber sheet 13c, a polyurethane-based rubber sheet to be used as a shock absorbing agent or the like may be preferably used. Moreover, as the urethane rubber sheet 13c, for example, while polyol and isocianate are included as a main content, other material is added or its mixture ratio is changed so as to have various functions such as a cushion property, a heat resistance, a sealing property, or a shock resistance, in correspondence with the application, resulting in obtaining a polyurethane-based sheet.

Hereinbelow, working examples of the above embodiments will be explained.

### (Working Example 1)

A transparent polyester film having a thickness of 38 µm was used as a core member, and one of the surfaces thereof was first subjected to a surface modifying treatment through corona discharging, and a silicone rubber sheet having a thickness of 40 µm was laminated thereon by using a coater, and on this surface, a polyester film that had been subjected to a mold-releasing treatment was laminated as a separator. Next, an acrylic adhesive layer having a thickness of 30 µm was laminated on the other surface of the core member by using a coater, and on this surface, a polyester film that had been subjected to a mold-releasing treatment was laminated as a separator so that a transparent one-sided re-peelable sheet having separators formed on both of the surfaces was obtained.

A transparent urethane-based high-molecular adhesive agent was formed into a gel state of 1 mm in thickness, and a commercially available gel sheet bearing separators formed on both of the surfaces thereof was prepared.

Then, one of the separators of the gel sheet was separated, and the separator of the one-sided re-peelable sheet on the acrylic adhesive layer side was separated so that the two sheets were bonded to each other to provide a mounting sheet.

Next, the separator of the mounting sheet on the silicone rubber sheet side was separated, and the mounting sheet was bonded to the entire rear face of the protective panel. Lastly, after the remaining separator that is the other separator of the gel sheet had been separated, the protective panel was bonded to the entire surface of a LCD.

### (Working Example 2)

In the same manner as the Working Example 1, two one-sided re-peelable sheets and one gel sheet were prepared, and one of the separators of the gel sheet was separated, and the separator of the first one-sided re-peelable sheet on the acrylic adhesive layer side was separated so that the two sheets were bonded to each other. Next, the other separator of the gel sheet was separated, and the separator of the second one-sided re-peelable sheet on the acrylic adhesive layer side was separated so that the two sheets were bonded to each other to prepare a mounting sheet.

Next, the remaining separator of the first one-sided re-peelable sheet of the mounting sheet was separated and the mounting sheet was bonded to the entire rear face of the protective panel. Lastly, after the remaining separator of the second one-sided re-peelable sheet had been separated, the protective panel was bonded to the entire surface of the LCD.

### (Working Example 3)

One one-sided re-peelable sheet and one gel sheet were prepared in the same manner as the Working Example 1, and one of the separators of the gel sheet was separated, and the separator of the one-sided re-peelable sheet on the acrylic adhesive layer side was separated so that the two sheets were bonded to each other. Next, the other separator of the gel sheet was separated, and an acrylic adhesive layer having a thickness of 30 µm was laminated thereon by using a coater, and a polyester film that had been subjected to a mold-releasing treatment was laminated on the surface thereof as a separator so that a mounting sheet was obtained.

Next, the separator of the mounting sheet on the silicone rubber sheet side was separated, and the mounting sheet was bonded to the entire rear surface of the protective panel. Lastly, after the separator on the side of the acrylic adhesive agent layer formed by the coater had been separated, the protective panel was bonded to the entire surface of a LCD.

In any of the Working Examples 1 to 3, upon assembling, distance errors between the rear face of the protective panel 1 and the surface of the display 6 were absorbed by the gel sheet so that bonding processes free from bubbles were carried out without the necessity of using a special facility.

By properly combining the arbitrary embodiments of the aforementioned various embodiments, the effects possessed by the embodiments can be produced.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A transparent mounting sheet for re-peelably mounting a protective panel (1, 71) for an electronic apparatus display window on a surface of a display (6), comprising:
a one-sided re-peelable sheet (3) comprising a core member (3a) of a plastic film, a silicone rubber sheet or urethane rubber sheet (3c, 13c) that is laminated on a primer treated surface formed by one surface of the core member having been subjected to a primer treatment and capable of being brought into contact with one of the protective panel (1, 71) for the electronic apparatus display window and the display (6), and an acrylic adhesive agent layer (3d) that is laminated on the other surface of the core member;
**characterized by**
a gel sheet (4) for absorbing an error between a designed distance between a rear face of the protective panel and the surface of the display and an assembled distance between the rear face of the protective panel and the surface of the display, at least one of the surfaces of the gel sheet being bonded to the acrylic adhesive agent layer,
wherein a thickness of the transparent mounting sheet is larger than the designed distance between the rear face of the protective panel and the surface of the display.

2. The transparent mounting sheet as defined in claim 1, wherein the one-sided re-peelable sheet is bonded to only the one of the surfaces of the gel sheet, while an acrylic adhesive agent layer (5) is laminated on the other surface of the gel sheet.

3. The transparent mounting sheet as defined in claim 1, wherein one of two outermost faces of the mounting sheet has a peeling strength that is higher than a peeling strength of the other outermost face.

4. The transparent mounting sheet as defined in claim 2, wherein one of two outermost faces of the mounting sheet has a peeling strength that is higher than a peeling strength of the other outermost face.

5. The transparent mounting sheet as defined in any one of claims 1 to 4, wherein the core member has a thickness of 12 µm or more.

6. The transparent mounting sheet as defined in any one of claims 1 to 4, wherein a thickness of the silicone rubber sheet or urethane rubber sheet forming the re-peelable face of the mounting sheet is set in a range from 20 to 100 µm.

7. The transparent mounting sheet as defined in any one of claims 1 to 4, wherein the acrylic adhesive agent layer has a thickness of 10 µm or more.

8. A mounting structure of a re-peelable protective panel, wherein the protective panel (1, 71) for the electronic apparatus display window is mounted on the surface of the display (6) in a manner so as to be re-peelable by using the transparent mounting sheet (2, 2A, 2B, 2C, 2D, 2E) as defined in any one of claims 1 to 4.

9. The mounting structure of a re-peelable protective panel, wherein the protective panel (1, 71) for the electronic apparatus display window is mounted on a surface of the display (6) in a manner so as to be re-peelable by using the transparent mounting sheet (2, 2A, 2B, 2C, 2D, 2E) as defined in claim 5.

10. The mounting structure of a re-peelable protective panel, wherein the protective panel (1, 71) for the electronic apparatus display window is mounted on a surface of the display (6) in a manner so as to be re-peelable by using the transparent mounting sheet (2, 2A, 2B, 2C, 2D, 2E) as defined in claim 6.

11. The mounting structure of a re-peelable protective panel, wherein the protective panel (1, 71) for the electronic apparatus display window is mounted on the surface of the display (6) in a manner so as to be re-peelable by using the transparent mounting sheet (2, 2A, 2B, 2C, 2D, 2E) as defined in claim 7.

12. The mounting structure of a re-peelable protective panel, wherein the transparent mounting sheet (2, 2A, 2B, 2C, 2D, 2E) as defined in any one of claims 1 to 4 is used for re-peelably mounting the protective panel (1, 71) for the electronic apparatus display window on the surface of the display (6), and the mounting structure has, at a periphery of the gel sheet, a space for allowing protrusion of a part of the gel sheet in a transverse direction by being compressed so as to absorb an error in the designed distance.

## Patentansprüche

1. Transparente Befestigungsfolie zum wiederabziehbaren Befestigen einer Schutzplatte (1, 71) für eine Anzeigeöffnung einer elektronischen Vorrichtung auf einer Oberfläche einer Anzeige (6), mit:
einer einseitig wiederabziehbaren Folie (3), die ein Kernelement (3a) aus einem Kunststofffilm, eine Silikongummifolie oder eine Urethangummifolie (3c, 13c), die auf einer mit einem Primer behandelten Oberfläche laminiert ist, welche aus einer Oberfläche des Kernelements, die einer Primerbehandlung ausgesetzt wurde und dazu geeignet ist, in Kontakt mit einer der Schutzplatten (1, 71) für die Anzeigeöffnung eines elektronischen Gerätes und der Anzeige (6) in Kontakt gebracht zu werden, gebildet ist, und eine Akrylklebemittelschicht (3d), die auf der anderen Oberfläche des Kernelements laminiert ist, aufweist, **gekennzeichnet durch**
eine Gelfolie (4) zum Ausgleichen eines Fehlers eines konstruktiv vorgesehenen Abstands zwischen der Rückfläche der Schutzplatte und der Oberfläche der Anzeige und eines Abstands im zusammengesetzten Zustand zwischen der Rückfläche der Schutzplatte und der Oberfläche der Anzeige, wobei zumindest eine der Oberflächen der Gelfolie mit der Akrylklebemittelschicht verbunden ist,
wobei eine Dicke der transparenten Befestigungsfolie größer als der konstruktiv vorgesehene Abstand zwischen der Rückseite der Schutzplatte und der Oberfläche der Anzeige ist.

2. Transparente Befestigungsfolie wie in Anspruch 1 definiert, wobei die einseitig wiederabziehbare Folie nur mit der einen Seite der Oberfläche der Gelfolie verbunden ist, während eine Akrylklebemittelschicht (5) auf der anderen Oberfläche der Gelfolie laminiert ist.

3. Transparente Befestigungsfolie wie in Anspruch 1 definiert, wobei eine der zwei äußersten Flächen der Befestigungsfolie eine Abziehfestigkeit aufweist, die höher als die Abziehfestigkeit der anderen äußeren Fläche ist.

4. Transparente Befestigungsfolie wie in Anspruch 2 definiert, wobei eine der zwei äußersten Flächen der Befestigungsfolie eine Abziehfestigkeit aufweist, die höher als die Abziehfestigkeit der anderen äußeren Fläche ist.

5. Transparente Befestigungsfolie wie in einem der Ansprüche 1 bis 4 definiert, wobei das Kernelement eine Dicke von 12 µm oder mehr aufweist.

6. Transparente Befestigungsfolie wie in einem der Ansprüche 1 bis 4 definiert, wobei eine Dicke der Silikongummifolie oder der Urethangummifolie, welche die wiederabziehbare Fläche der Befestigungsfolie bilden, in einem Bereich von 20 bis 100 µm festgelegt ist.

7. Transparente Befestigungsfolie wie in einem der Ansprüche 1 bis 4 definiert, wobei die Akrylklebemittelschicht eine Dicke von 10 µm oder mehr aufweist.

8. Befestigungsstruktur einer wiederabziehbaren Schutzplatte, wobei die Schutzplatte (1, 71) für die Anzeigeöffnung einer elektronischen Vorrichtung auf eine solche Weise auf der Oberfläche der Anzeige (6) befestigt ist, um unter Verwendung der, in einem der Ansprüche 1 bis 4 definierten, transparenten Befestigungsfolie (2, 2A, 2B, 2C, 2D, 2E), wiederabziehbar zu sein.

9. Befestigungsstruktur einer wiederabziehbaren Schutzplatte, wobei die Schutzplatte (1, 71) für die Anzeigeöffnung einer elektronischen Vorrichtung auf eine solche Weise auf der Oberfläche der Anzeige (6) befestigt ist, um unter Verwendung der, in Anspruch 5 definierten, transparenten Befestigungsfolie (2, 2A, 2B, 2C, 2D, 2E), wiederabziehbar zu sein.

10. Befestigungsstruktur einer wiederabziehbaren Schutzplatte, wobei die Schutzplatte (1, 71) für die Anzeigeöffnung einer elektronischen Vorrichtung auf eine solche Weise auf der Oberfläche der Anzeige (6) befestigt ist, um unter Verwendung der, in Anspruch 6 definierten, transparenten Befestigungsfolie (2, 2A, 2B, 2C, 2D, 2E), wiederabziehbar zu sein.

11. Befestigungsstruktur einer wiederabziehbaren Schutzplatte, wobei die Schutzplatte (1, 71) für die Anzeigeöffnung einer elektronischen Vorrichtung auf eine solche Weise auf der Oberfläche der Anzeige (6) befestigt ist, um unter Verwendung der, in Anspruch 7 definierten, transparenten Befestigungsfolie (2, 2A, 2B, 2C, 2D, 2E), wiederabziehbar zu sein.

12. Befestigungsstruktur einer wiederabziehbaren Schutzplatte, wobei die, wie in einem der Ansprüche 1 bis 4 definierte, transparente Befestigungsfolie (2, 2A, 2B, 2C, 2D, 2E) zum wiederabziehbaren Befestigen der Schutzplatte (1, 71) für die Anzeigeöffnung einer elektronischen Vorrichtung auf der Oberfläche der Anzeige (6) verwendet wird, und wobei die Befestigungsstruktur an der Kante der Gelfolie einen Freiraum aufweist, der es einem Teil der Gelfolie ermöglicht, durch Zusammendrücken, sodass ein Fehler des konstruktiv vorgesehenen Abstands ausgeglichen wird, in einer Querrichtung hervorzustehen.

## Revendications

1. Feuille de montage transparente pour le montage de manière à pouvoir le redécoller d'un panneau de protection (1, 71) pour une fenêtre d'affichage d'appareil électronique sur une surface d'un afficheur (6), comprenant :
une feuille monoface pouvant être redécollée (3) comprenant un élément formant âme (3a) d'un film en plastique, une feuille de caoutchouc de silicone ou une feuille de caoutchouc d'uréthane (3c, 13c) qui est stratifiée sur une surface traitée formant amorce formée par une surface particulière de l'élément formant âme ayant été soumise à un traitement d'amorce et susceptible d'être mise en contact avec l'un du panneau de protection (1, 71) pour la fenêtre d'affichage d'appareil électronique et de l'afficheur (6), et une couche d'agent adhésif acrylique (3d) qui est stratifiée sur l'autre surface de l'élément formant âme ; **caractérisée par**
une feuille de gel (4) pour absorber une erreur entre une distance de conception entre une face arrière du panneau de protection et la surface de l'afficheur et une distance assemblée entre la face arrière du panneau de protection et la surface de l'afficheur, au moins une des surfaces de la feuille de gel étant liée à la couche d'agent adhésif acrylique,
dans lequel une épaisseur de la feuille de montage transparente est plus grande que la distance de conception entre la face arrière du panneau de protection et la surface de l'afficheur.

2. Feuille de montage transparente selon la revendication 1, dans laquelle la feuille monoface pouvant être redécollée est liée seulement à l'une des surfaces de la feuille de gel, tandis qu'une couche d'agent adhésif acrylique (5) est stratifiée sur l'autre surface de la feuille de gel.

3. Feuille de montage transparente selon la revendication 1, dans laquelle une des deux faces les plus extérieures de la feuille montante a une résistance au détachement qui est supérieure à une résistance au détachement de l'autre face la plus extérieure.

4. Feuille de montage transparente selon la revendication 2, dans laquelle une des deux faces les plus extérieures de la feuille de montage a une résistance au détachement qui est supérieure à une résistance au détachement de l'autre face la plus extérieure.

5. Feuille de montage transparente selon l'une quelconque des revendications 1 à 4, dans laquelle l'élément formant âme a une épaisseur de 12 µm ou plus.

6. Feuille de montage transparente selon l'une quelconque des revendications 1 à 4, dans laquelle une épaisseur de la feuille de caoutchouc de silicone ou de la feuille de caoutchouc d'uréthane formant la face pouvant être redécollée de la feuille de montage est fixée dans une plage de 20 à 100 µm.

7. Feuille de montage transparente selon l'une quelconque des revendications 1 à 4, dans laquelle la couche d'agent adhésif acrylique a une épaisseur de 10 µm ou plus.

8. Structure de montage d'un panneau de protection pouvant être redécollé, dans laquelle le panneau de protection (1, 71) pour la fenêtre d'affichage d'appareil électronique est monté sur la surface de l'afficheur (6) de façon à pouvoir être redécollé en utilisant la feuille de montage transparente (2, 2A, 2B, 2C, 2D, 2E) selon l'une quelconque des revendications 1 à 4.

9. Structure de montage d'un panneau de protection pouvant être redécollé, dans laquelle le panneau de protection (1, 71) pour la fenêtre d'affichage d'appareil électronique est monté sur une surface de l'afficheur (6) de façon à pouvoir être redécollé en utilisant la feuille de montage transparente (2, 2A, 2B, 2C, 2D, 2E) selon la revendication 5.

10. Structure de montage d'un panneau de protection pouvant être redécollé, dans laquelle le panneau de protection (1, 71) pour la fenêtre d'affichage d'appareil électronique est monté sur une surface de l'afficheur (6) de façon à pouvoir être redécollé en utilisant la feuille de montage transparente (2, 2A, 2B, 2C, 2D, 2E) selon la revendication 6.

11. Structure de montage d'un panneau de protection pouvant être redécollé, dans laquelle le panneau de protection (1, 71) pour la fenêtre d'affichage d'appareil électronique est monté sur la surface de l'afficheur (6) de façon à pouvoir être redécollé en utilisant la feuille de montage transparente (2, 2A, 2B, 2C, 2D, 2E) selon la revendication 7.

12. Structure de montage d'un panneau de protection pouvant être redécollé, dans laquelle la feuille de montage transparente (2, 2A, 2B, 2C, 2D, 2E) selon l'une quelconque des revendications 1 à 4 est utilisée pour le montage de façon à pouvoir le redécoller du panneau de protection (1, 71) pour la fenêtre d'affichage d'appareil électronique sur la surface de l'afficheur (6), et la structure de montage a, au niveau d'une périphérie de la feuille de gel, un espace pour permettre la protubérance d'une partie de la feuille de gel dans une direction transversale en étant comprimée de façon à absorber une erreur de la distance de conception.
